# EUROPÄISCHE PATENTSCHRIFT

(11) **EP 0 985 721 B1**
(45) Veröffentlichungstag und Bekanntmachung des Hinweises auf die Patenterteilung: **29.08.2001**
(21) Anmeldenummer: 99111073.5
(22) Anmeldetag: 16.06.1999
(51) Int. Cl.: C09K 19/40, C08G 77/38

(54) **Zu optisch anisotropen Polymerschichten vernetzbare flüssigkristalline nematische Organosiloxane**
Nematic liquid crystalline organosiloxanes crosslinkable to optical anisotropic polymer layers
Couches de polymère optiquement anisotropes à partir d'organosiloxanes nematiques liquides cristallins réticulables

(30) Priorität: 23.07.1998 DE 19833258
(43) Veröffentlichungstag der Anmeldung: 15.03.2000
(73) Patentinhaber: Consortium für elektrochemische Industrie GmbH, 81379 München (DE)
(72) Erfinder: Hanelt, Eckhard, Dr., 82269 Geltendorf (DE); Sandmeyer, Frank, Dr., 84489 Burghausen (DE); Häberle, Norman, Dr., 80689 München (DE)
(74) Vertreter: Fritz, Helmut, Dr.

(56) Entgegenhaltungen:
- EP-A- 0 617 111
- EP-A- 0 626 386
- EP-A- 0 709 445
- EP-A- 0 711 780
- LACEY D ET AL: "ORIENTATION EFFECTS IN MONODOMAIN NEMATIC LIQUID CRYSTALLINE POLYSILOXANE ELASTOMERS" JOURNAL OF MATERIALS CHEMISTRY, Bd. 8, Nr. 1, 1. Januar 1998 (1998-01-01), Seiten 53-60, XP000736624 ISSN: 0959-9428

## Beschreibung

Die vorliegende Erfindung betrifft Organosiloxane mit mindestens zwei mesogenen Seitengruppen, deren Herstellung und Verwendung zur Herstellung optisch anisotroper Schichten

Niedermolekulare nematische Verbindungen, die vielfältig Anwendung in Flüssigkristallanzeigen (LCDs) finden, zeichnen sich durch eine gute Orientierbarkeit und Schaltbarkeit im elektrischen Feld aus. Ihre orientierte Struktur ist ohne elektrisches Feld jedoch nicht besonders stabil. Mit zunehmender Erwärmung nimmt die nematische Orientierung ab, bis schließlich keine geordnete Struktur mehr vorhanden ist. Für manche Anwendungen, beispielsweise in Polarisationsfiltern und Verzögerungsfolien werden dagegen Materialien benötigt, deren nematische Orientierung über einen weiten Temperaturbereich erhalten bleibt. In vielen Fällen wird außerdem bevorzugt, wenn die orientierte Struktur in einem festen Film fixiert ist, statt daß wie bei den niedermolekularen nematischen Verbindungen eine flüssige Substanz zwischen Substraten eingeschlossen ist.

Ein bekannter Weg zur Fixierung flüssigkristalliner Eigenschaften ist die Einbindung der Flüssigkristalle in polymere Netzwerke, z. B. durch nachträgliche Vernetzung von orientierten flüssigkristallinen Seitenkettenpolymeren. Flüssigkristalline Seitenkettenpolymere lassen sich jedoch in der Regel wegen ihrer höheren Viskosität, die im allgemeinen mit dem Molekulargewicht ansteigt, schlechter orientieren als niedermolekulare Flüssigkristalle. Gut orientierbare flüssigkristalline Seitenkettenpolymere sind z. B. cholesterische Siloxane. In US-A-5,211,877, werden solche Verbindungen basierend auf cyclischen Organosiloxanen mit Cholesterin und Methacrylgruppen enthaltenden Seitenketten beschrieben. Durch den Ersatz von Cholesterin durch eine zwei Phenylreste enthaltende Verbindung konnte dort jedoch nur ein Material mit smektischer SA-Phase und Beimischungen einer höher geordneten SB-Phase induziert werden, das schlecht zu orientieren ist und die sich daher für die vorgesehenen Anwendungen nicht eignet.

Aus US-A-5,610,258 ist Stand der Technik, daß weder Organosiloxane mit verschiedenartigen Seitengruppen mit jeweils zwei aromatischen oder cycloaliphatischen Resten, noch Organosiloxane mit gleichartigen mesogenen Seitengruppen mit jeweils mehr als zwei aromatischen oder cycloaliphatischen Resten leicht zu orientieren sind und gleichzeitig eine breite nematische Phase aufweisen. Als gut orientierbare Seitenkettenpolymere mit breiter nematischer Phase werden dort dagegen cyclische Organosiloxane mit mindestens drei unterschiedlichen mesogenen Seitengruppen pro Organosiloxan beschrieben, wobei mindestens zwei mesogene Seitengruppen pro Organosiloxan jeweils mindestens drei aromatische, heteroaromatische und / oder cycloaliphatische Reste enthalten müssen. Die Synthese der beschriebenen Verbindungen verläuft über viele separate Stufen und ist für einen technischen Prozeß zu aufwendig. Fordert man, daß die Herstellung einer optisch anisotropen Schicht aus diesen Materialien innerhalb einer produktionstechnisch vertretbaren Zeit abgeschlossen ist, dann können aus den beschriebenen Organosiloxanen nur trübe optisch anisotrope Schichten hergestellt werden.

EP-A-617111 beschreibt optisch anisotrope Filme, deren optische Achse senkrecht oder schräg zur Filmebene steht. Das dort konkret genannte vernetzbare Organosiloxan zeigt smektisches Verhalten.

In D. Lacey et al., "orientation effects in monodomain nematic liquid crystalline polysiloxane elastomers", Journal of Materials Chemistry, Band 8, Nr. 1, 1. Januar 1998, Seiten 53 bis 60, sind vernetzbare Organosiloxane beschrieben, die eine große Kettenlänge aufweisen. Diese vernetzbaren Organosiloxane haben wegen ihrer großen Kettenlänge eine sehr hohe Viskosität. Sie orientieren sich nicht spontan, sondern nur durch starke äußere Krafteinwirkung, wie z. B. Verstrecken. Eine gleichmäßige Orientierung einer großen Fläche ist so kaum möglich.

Aufgabe der vorliegenden Erfindung war, Verbindungen bereitzustellen, die in großem Maßstab einfach zu synthetisieren sind die leicht in einen nematisch orientierten Zustand gebracht werden können, wobei aus den Verbindungen durch nachträgliche Vernetzung klare optisch anisotrope Schichten hergestellt werden können.

Gegenstand der Erfindung sind nematische Organosiloxane (F), die 2 bis 15 Siliziumatome enthalten und die mindestens zwei Einheiten der allgemeinen Formel (1)

[MR¹ ₚSiO_{q/2}] (1)

enthalten, in denen unabhängig voneinander jeweils entweder p=1 und q=2 oder p=2 und q=1 ist,
- **R**^{**1**}: C₁- bis C₁₀-Kohlenwasserstoffreste bedeutet und in denen
- **M**: mesogene Seitengruppen der allgemeinen Formel (2)

R²-X¹-(A¹-X²)ₐ-R³-A² (2)

sind, wobei in der vorstehenden Formel (2)
- **R**^{**2**}: einen Rest der Formel (CH₂)ₙ bedeutet, in dem n eine ganze Zahl im Wert von 2 bis 10 ist, wobei eine oder mehrere, einander nicht benachbarte Methyleneinheiten durch Sauerstoffatome oder Dimethylsilylreste ersetzt sein können,
- **R**^{**3**}: eine chemische Bindung oder einen Rest der Formel (CH₂)ₘ bedeutet, in dem m eine ganze Zahl im Wert von 1 bis 12 ist, wobei eine oder mehrere, einander nicht benachbarte Methyleneinheiten durch Sauerstoffatome oder Dimethylsilylreste ersetzt sein können,
- **X**^{**1**}: eine chemische Bindung ist oder ausgewählt wird aus zweibindigen Resten der Gruppe -O-, -COO- und -OCO-,
- **X**^{**2**}: gleiche oder verschiedene Bindungsgruppen bedeutet, die unabhängig voneinander ausgewählt sind aus der Gruppe der chemischen Bindung und zweibindigen Resten der Gruppe -COO-, -OCO-, -CH₂CH₂-, -CH=N-, -N=CH-, -N=N-, -CONH-, -HONC-, -C≡C-, -CH=CH-, -N=N(O)- und -N(O)=N-,
- **A**^{**1**}: gleiche oder verschiedene Kerne bedeutet, die unabhängig voneinander ausgewählt werden aus zweibindigen Resten der Gruppe 1,4-Phenylen, 1,4-Cyclohexylen, 2,5-Pyridinylen, 2,5-Pyranylen, 2,5-Pyrimidinylen, 5,2-Pyrimidinylen, 2,5-(1,3- Dioxanylen), 5,2- (1,3- Dioxanylen), 2,6-Naphthyliden, 2,7-Naphthyliden und 1,4-Naphthyliden,
- **A**^{**2**}: eine Endgruppe bedeutet, die ausgewählt wird aus der Gruppe der Wasserstoffatome, Halogenatome, Hydroxyl-, Phenyl-, Acryloyloxy-, (Meth)acryloyloxy-, (Meth)acrylethylenoxyreste und der Cyclohexanreste und
- **a**: die Werte 2 oder 3 annehmen kann. mit der Maßgabe, daß von den mesogenen Seitengruppen **M** höchstens eine drei Kerne **A**^{**1**} besitzt und alle anderen zwei Kerne **A**^{**1**} besitzen, und mindestens eine der mesogenen Seitengruppen **M** eine Methacryl- oder Acrylgruppe enthält.

Überraschend und entgegen dem geltenden Kenntnisstand weisen diese Organosiloxane (F) flüssigkristalline Phasen in einem breiten Temperaturbereich und gute nematische Orientierbarkeit auf, so daß daraus mit geringem Aufwand optisch anisotrope Schichten hergestellt werden können.

Als Kerne geeignet sind sechsgliedrige homocyclische oder heterocyclische Ringe wie zum Beispiel Phenylringe, Cyclohexylringe, Pyranringe, Pyridinringe, Pyrimidinringe oder Dioxanringe, und aus sechsgliedrigen Ringen bestehende Bicyclen, wie Naphthalinsysteme.

In den nematischen Organosiloxanen (F) beträgt der Anteil der mesogenen Seitengruppen, die Methacryl- oder Acrylgruppen aufweisen, vorzugsweise mindestens 10 %, besonders bevorzugt mindestens 40 %. Die Methacryl- oder Acrylgruppen an den mesogenen Seitengruppen sind vorzugsweise endständig.

Neben den Einheiten der allgemeinen Formel (1) können die Organosiloxane (F) bevorzugt Einheiten der Formel R¹₂Si und R¹₃Si enthalten. Als Endgruppen sind Trimethylsilylgruppen bevorzugt.

Besonders bevorzugte Organosiloxane (F) gemäß der allgemeinen Formel (1) sind substituierte Cyclotetrasiloxane, Cyclopentasiloxane, Tetramethyldisiloxane und lineare Polymethylsiloxane mit Anzahl der Siliziumatome von 2 bis 15 und Trimethylsilylgruppen als Endgruppen. Besonders bevorzugt als Reste R¹ sind Methylreste.

Organosiloxane (F), bei denen eine mesogene Seitengruppe drei Kerne besitzt, sind besonders gut geeignet, daraus optisch anisotrope Schichten herzustellen, da die Verwendung dreikerniger Mesogene eine Erhöhung der Klärpunktstemperatur bewirkt und zur Stabilisierung der nematischen Phase beiträgt.

Es wurde gefunden, daß die Einführung der Gruppe -COO- oder-OCO- als Rest **X**^{**2**} die Ausbildung einer homogenen nematischen Phase ohne störende Beimischungen kristalliner Anteile oder anderer Phasen günstig beeinflußt.

Besonders bevorzugte Organosiloxane (F) enthalten mindestens zwei Einheiten der allgemeinen Formel (1), in der mesogene Seitengruppen der allgemeinen Formel (3) 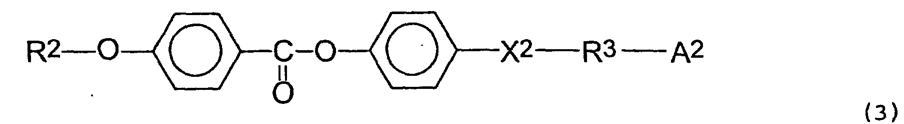 bedeutet, wobei **R**^{**2**}**, X**^{**2**}**, R**^{**3**} und **A**^{**2**} die für die Formel (2) angegebenen Bedeutungen haben.

Ganz besonders bevorzugte mesogene Seitengruppen mit zwei oder drei aromatischen Resten der allgemeinen Formel (3), die keine Methacryl- oder Acrylgruppe enthalten, sind diejenigen der allgemeinen Formel (4), 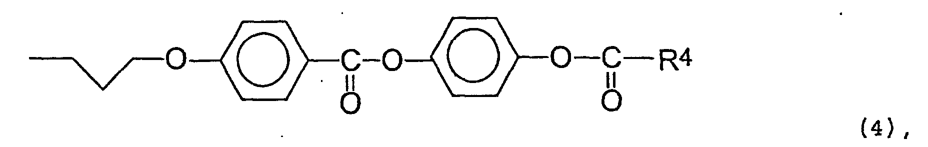 in der R⁴ einen C₁- bis C₁₀-Alkyl-, C₁- bis C₁₀-Halogenalkyl-, Cyclohexyl-, Phenyl-, 4-(C₁- bis C₁₀-)Alkylphenyl-, 4-(C₁- bis C₆-)Alkoxyphenyl- oder 2-Naphthylrest bedeutet.

Ganz besonders bevorzugte mesogene Seitengruppen, welche eine Methacryl- oder Acrylgruppe aufweisen, sind diejenigen der allgemeinen Formel (5), 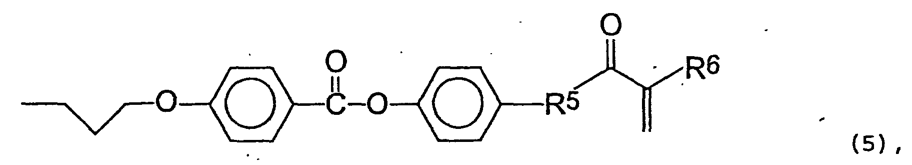 in der **R**^{**5**} ein Sauerstoffatom oder einen Oxy-(C₁- bis C₁₁-)-alkylenoxyrest, in dem eine oder mehrere, nicht miteinander oder mit Sauerstoff benachbarte Methyleneinheiten durch Sauerstoffatome ersetzt sein können und R⁶ ein Wasserstoffatom oder einen Methylrest bedeutet.

Die Organosiloxane (F) können synthetisiert werden durch ein Verfahren bei dem Organosiloxane, die mindestens zwei Einheiten der allgemeinen Formel (6)

[HR¹ ₚSiO_{q/2}] (6)

enthalten, in denen unabhängig voneinander jeweils entweder p=1 und q=2 oder p=2 und q=1 ist,
mit mesogene Reste aufweisenden Alkenen der allgemeinen Formel (7)

R⁷-X¹-(A¹-X²)ₐ-R³-A² (7)

oder besonders bevorzugt mit mesogene Reste aufweisenden Alkenen der allgemeinen Formel (8) 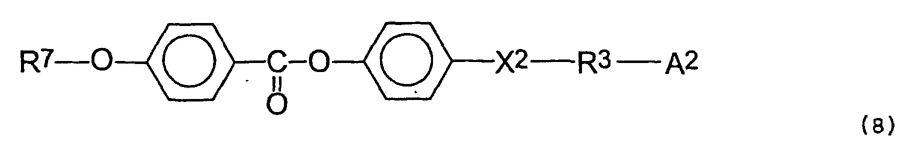 umgesetzt, wobei in den vorstehenden allgemeinen Formeln (6), (7) und (8)
- **R**^{**1**}**, R**^{**3**}**, X**^{**1**}**, X**^{**2**}**, A**^{**1**}**, A**^{**2**} und **a**: die für die allgemeinen Formeln (1) und (2) angegebenen Bedeutungen haben und
- **R**^{**7**}: einen Rest der Formel H₂C = CH-(CₖH₂ₖ₋₁) bedeutet, in dem **k** eine ganze Zahl im Wert von 1 bis 8 ist, wobei eine oder mehrere, einander nicht benachbarte Methyleneinheiten durch Sauerstoffatome oder Dimethylsilylreste ersetzt sein können, mit der Maßgabe, daß von den Alkenen der allgemeinen Formel 7 höchstens eines drei Kerne **A**^{**1**} besitzt und alle anderen zwei Kerne **A**^{**1**} besitzen, und mindestens eines der Alkene der allgemeinen Formel 7 eine Methacryl- oder Acrylgruppe enthält.

Die Umsetzung von direkt an Silicium gebundene Wasserstoffatome aufweisenden Organosiloxanen der allgemeinen Formel⁻ (6) mit mesogene Eigenschaften aufweisenden Alkenen der allgemeinen Formeln (7) oder (8) erfolgt in an sich bekannter Weise, z. B. durch Hydrosilylierung in Lösungsmitteln, wie Kohlenwasserstoffen, Ethern oder Estern mit Metallen oder Verbindungen der Platingruppe als Katalysator. Geeignete Verfahren zur Hydrosilylierung sind beispielsweise in US-A-5,211,877 beschrieben.

Zur Herstellung der optisch anisotropen Schichten können sowohl Organosiloxane (F) als auch Mischungen von Organosiloxanen (F) untereinander als auch mit anderen flüssigkristallinen oder nichtflüssigkristallinen Materialien eingesetzt werden, soweit diese zusätzlichen Mischungskomponenten die Ausbildung der nematischen Phase nicht behindern.

Als bevorzugte zusätzliche Mischungskomponenten werden Verbindungen der allgemeinen Formeln (9) oder (10)

R⁸-X¹-(A¹-X²)ₐ-R³-A² (9)

A⁴-R¹⁰-(X⁴-A³)_{b}-X³-R⁹-K¹-R¹¹-X⁵-(A⁵-X⁶)_{c}-R¹²-A⁶ (10),

verwendet, wobei in den vorstehenden allgemeinen Formeln (9) und (10)
- **R**^{**3**}**, X**^{**1**}**, X**^{**2**}**, A**^{**1**}**, A**^{**2**} und **a**: die für die allgemeine Formel (2) angegebenen Bedeutungen haben,
- **R**^{**8**}: ausgewählt ist aus der Gruppe der Acryloyloxy-, (Meth)acryloyloxy- und (Meth)acrylethylenoxyreste, der C₁ bis C₁₀-Alkenylreste und der Gruppe der Reste mit der Formel H₂C = CH-(CⱼH₂ⱼ₋₁) in der **j** eine ganze Zahl im Wert von 1 bis 8 ist, wobei eine oder mehrere, einander nicht benachbarte Methyleneinheiten durch Sauerstoffatome oder Dimethylsilylreste ersetzt sein können,
- **K**^{**1**}: ausgewählt ist aus der Gruppe der Dianhydrohexit-Derivate und inbesondere Dianhydrosorbid oder Dianhydromannit bedeutet,
- **R**^{**9**}**, R**^{**10**}**, R**^{**11**} und **R**^{**12**}: unabhängig voneinander dieselbe Bedeutung wie **R**^{**3**} haben,
- **X**^{**3**} und **X**^{**5**}: unabhängig voneinander dieselbe Bedeutung wie **X**^{**1**} haben,
- **X**^{**4**} und **X**^{**6**}: unabhängig voneinander dieselbe Bedeutung wie **X**^{**2**} haben,
- **A**^{**3**} und **A**^{**5**}: unabhängig voneinander dieselbe Bedeutung wie **A**^{**1**} haben,
- **A**^{**4**} und **A**^{**6**}: gleiche oder verschiedene Reste bedeuten, die ausgewählt sind aus der Gruppe der Wasserstoffatome, Halogenatome, Hydroxyl-, Nitril-, Acryloyloxy-, (Meth)acryloyloxy-, (Meth)acrylethylenoxyrest, Cyclohexanreste und der C₁-C₁₀-Alkenylreste, wobei eine oder mehrere, einander nicht benachbarte Methyleneinheiten durch Sauerstoffatome oder Dimethylsilylreste ersetzt sein können, und
- **b, c**: unabhängig voneinander die Werte 2, 3 oder 4 annehmen können.

Die optisch anisotropen Schichten werden vorzugsweise hergestellt, indem Organosiloxane (F) oder eine diese flüssigkristallinen Organosiloxane (F) enthaltende LC - Mischung auf ein Substrat aufgetragen, orientiert und anschließend durch eine chemische vernetzende Reaktion fixiert werden. Besonders bevorzugt werden zur Herstellung der optisch anisotropen Schichten flüssigkristalline Organosiloxane gemäß der allgemeinen Formel (1) und Mischungen dieser Organosiloxane mit Verbindungen der allgemeinen Formeln (9) und (10) verwendet.

Die Organosiloxane (F) oder eine diese flüssigkristallinen Organosiloxane enthaltende LC - Mischung können in Lösung oder als lösungsmittelfreie Trockensubstanz oberhalb des Glaspunkts auf die Substratoberfläche, beispielsweise durch Spincoating, mit einer Rakel oder einer Walze, aufgetragen werden. Falls zum Auftragen ein Lösungsmittel verwendet wird, muß dieses in einem nachfolgenden Trocknungsschritt entfernt werden.

Die Dicke der trockenen LC-Schicht auf dem Substrat hängt von den Anforderungen der jeweiligen Anwendung ab. Wird die Schicht beispielsweise als Verzögerungsplatte verwendet, dann ist die notwendige Dicke der Quotient aus geforderter optischer Verzögerung und optischer Anisotropie der orientierten LC-Schicht. Vorzugsweise beträgt die Dicke der trockenen LC-Schicht 1 *µ*m bis 500 *µ*m, besonders bevorzugt 1 *µ*m bis 50 *µ*m.

Das Auftragen und die Orientierung der LC - Mischung kann vollkontinuierlich, semikontinuierlich oder diskontinuierlich geschehen. Ein vollkontinuierliches Verfahren wird in US-A-5,362,315 beschrieben.

Die LC-Schicht kann durch ein zweites Substrat abgedeckt werden. Die Orientierung der Mesogene erfolgt beispielsweise durch die Scherung des Materials beim Auftragen oder beispielsweise nach dem Auftragen durch die Wechselwirkung der Mesogene mit der bzw. den entsprechend ausgewählten Substratoberflächen oder durch ein elektrisches Feld.

Die Orientierung der LC-Mischung erfolgt vorzugsweise in einem Temperaturbereich von oberhalb des Glaspunktes bis unterhalb des Klärbeginns der jeweiligen LC - Mischung. Um einen einfachen technischen Prozeß zu ermöglichen, wird die Zusammensetzung der LC - Mischung vorzugsweise so abgestimmt, daß die für das Herstellverfahren geeignete Orientierungstemperatur zwischen 20°C und 150°C liegt.

Wenn die Orientierung der Mesogene durch eine Wechselwirkung mit der bzw. den Substratoberflächen erfolgen soll, dann kann zur Verbesserung der orientierenden Wirkung eine geeignete Orientierungsschicht durch bekannte, in der Literatur vielfach beschriebene Coating-, Druck- oder Tauchverfahren auf das oder die Substratoberflächen aufgebracht werden. Die Orientierungsschichten oder die Substrate können durch zusätzliche Behandlung, z.B. Reiben, eine die Orientierung begünstigende Oberflächenstruktur erhalten. Eine ortsabhängige Veränderung der Orientierungsrichtung ist beispielsweise durch bekannte Verfahren zur Strukturierung der Orientierungsschicht mittels Belichtung mit polarisiertem UV-Licht möglich. Geeignete Verfahren zum Erreichen einer Neigung zwischen den Mesogenen einer flüssigkristallinen Phase und ihren Grenzflächen sind ebenfalls in der Literatur beschrieben, beispielsweise das Aufdampfen anorganischer Materialien unter einem schrägen Winkel. Um eine Neigung der Mesogene in einem Winkel von 10° bis 80° relativ zur Substratoberfläche zu erreichen, wird besonders bevorzugt eine Schicht aus Siliciumoxid aufgedampft.

Als Substrate können alle Materialien verwendet werden, die zur Herstellung von optischen Elementen bekannt sind.

Bevorzugt sind organische oder anorganische Substrate, die im für die jeweilige Anwendung relevanten Wellenlängenbereich transparent oder semitransparent sind. Die Substrate können eben oder gekrümmt sein. Besonders bevorzugt werden Substrate verwendet, die bei der Temperatur der Herstellung, Verarbeitung und Anwendung der LC - Schichten ihre physikalischen Eigenschaften nicht verändern.

Ganz besonders bevorzugt sind Glas- oder Quarzplatten und Polymerfilme, wie beispielsweise Polycarbonate, Polysulfone, Polyethylenterephthalate und Polyimide. Bei Bedarf können das oder die Substrate mit einer zusätzlichen Orientierungshilfe wie beispielsweise einer Schicht aus Polyimid, Polyamid, Polyvinylalkohol oder einem Siliciumoxid versehen sein.

Nach erfolgter Orientierung werden die flüssigkristallinen Organosiloxane (F) oder die diese flüssigkristallinen Organosiloxane (F) enthaltenden LC - Mischungen in den erfindungsgemäßen optisch anisotropen Schichten fixiert. Dazu werden die Organosiloxane (F) dreidimensional vernetzt. Diese Vernetzung wird vorzugsweise mittels freier Radikale bewirkt, welche durch Peroxide, durch UV-Licht oder durch energiereiche elektromagnetische Strahlung oder thermisch erzeugt werden. Die Vernetzung kann aber auch mittels direkt an Silicium gebundene Wasserstoffatome enthaltende Vernetzer unter Katalyse durch Platinmetallkatalysatoren bewirkt werden. Sie kann auch kationisch oder anionisch erfolgen. Besonders bevorzugt ist die Vernetzung durch UV-Licht, die in US-A-5,211,877 beschrieben ist.

Die resultierende fixierte Schicht kann zusammen mit dem Substrat in Form eines Laminats, als einseitig offener Film oder nach Entfernen des oder der Substrate auch als freier Film verwendet werden. Bevorzugt wird die Verwendung als Film zusammen mit dem Substrat oder als einseitig offener Film.

Eine andere Anwendungsform der erfindungsgemäßen optisch anisotropen Schichten sind optisch anisotrope Plättchen, die im folgenden Text auch als LC-Plättchen bezeichnet werden. In US-A-5,362,315 ist offengelegt, wie Pigmente mit flüssigkristalliner Struktur mit chiraler Phase, die Licht farbig reflektieren, durch Ablösen eines polymerisierten cholesterischen Films vom Substrat und anschließendes Zerkleinern der so gewonnenen Rohschollen hergestellt werden können. Danach können die Pigmente in ein geeignetes Bindemittelsystem eingearbeitet und auf ein Substrat aufgebracht werden. In DE-A-196 19 460 ist beschrieben, wie Plättchen mit für sichtbares Licht negativer Brechungsindexanisotropie durch ein ähnliches Verfahren hergestellt und verwendet werden können. Ebenso können auch die hier beschriebenen Schichten in optisch anisotrope Plättchen zerkleinert und anschließend in einem Bindemittel auf ein Substrat aufgetragen werden.

Bevorzugt werden zur Herstellung der LC-Plättchen flüssigkristalline Organosiloxane (F) gemäß der allgemeinen Formel (1) und Mischungskomponenten gemäß der allgemeinen Formeln (9) und (10) verwendet.

Zusammenhängende Filme der Schichten aus flüssigkristallinen Organosiloxanen (F) können für alle Zwecke eingesetzt werden, für die optisch anisotrope Schichten mit positiver Brechungsindexanisotropie geeignet sind, beispielsweise als optische Retarderfilme zur Verbesserung der Eigenschaften von Flüssigkristallanzeigen, die in der Literatur vielfach beschrieben sind. Abhängig von der Wahl der Substrate und der Orientierungsschichten sowie der Zusammensetzung der Organosiloxane (F) und der diese Organosiloxane (F) enthaltenden LC-Mischungen können unterschiedliche Formen der Orientierung erreicht werden, die beispielsweise in Flüssigkristallanzeigen wie TN- oder STN-Displays vorteilhaft eingesetzt werden können. Beispiele möglicher Orientierungen der Mesogene in den erfindungsgemäßen Schichten sind eine homogene und planare Ausrichtung aller Mesogene, eine Hybridorientierung, bei der die Ausrichtung von einer Oberfläche zur gegenüberliegenden kontinuierlich von planar zu homöotrop wechselt, eine vollständig homöotrope Ausrichtung aller Mesogene oder eine um die Flächennormale verdrillte planare Orientierung, bei der die Mesogene beispielsweise durch Dotieren mit einem Chiralikum oder durch gegeneinander verdrehte Orientierungschichten ähnlich wie in einer TN- oder STN-Zelle orientiert sind.

Durch geringfügige Abwandlung des oben beschriebenen Prozesses zur Herstellung der optisch anisotropen Schichten lassen sich weitere Anwendungen verwirklichen. Beispielsweise können absorptive Polarisationsfilter hergestellt werden, wenn eine Mischung verwendet wird, die zusätzlich zu den Organosiloxanen (F) auch geeignete Farbstoffmoleküle enthält, die sich entlang der Mesogene ausrichten und dabei die Ausbildung der flüssigkristallinen Phase nicht behindern.

Optische Speichermedien, die auf einer lokalen Änderung des Brechungsindex beruhen, lassen sich herstellen, indem die Orientierung der mesogenen Reste des flüssigkristallinen Organosiloxans (F) vor dem Vernetzen lokal verändert wird. Dies kann beispielsweise durch lokale UV-Vernetzung durch eine für UV-Strahlung undurchlässige Maske erreicht werden, wenn zwischen den einzelnen Belichtungsschritten die von außen wirkenden Orientierungskräfte oder die Temperatur der LC-Schicht verändert wird. Eine andere Möglichkeit ist die Strukturierung der Orientierungsschicht, wie sie beispielsweise bei der LCD-Herstellung zur Erzeugung von Sub-Pixeln angewendet wird.

In einer Mischung mit Materialien, die eine chirale nematische Phase induzieren (Chiralika), können die Organosiloxane (F) oder eine diese flüssigkristallinen Organosiloxane enthaltende LC-Mischung verwendet werden zur Herstellung von polarisations-und wellenlängenselektiven optischen Filtern oder LC-Plättchen.

Solche cholesterischen Flüssigkristalle (Cholesteric Liquid Crystal; CLC) reflektieren zirkular polarisierte elektromagnetische Strahlung in einem von der helikalen Struktur des CLC abhängigen Wellenbereich. Die Chiralika erzeugen im Nematen entweder eine rechts- oder linkshändig verdrillte Struktur, die zirkularpolarisiertes Licht mit gleicher Helizität reflektiert. Die zentrale Wellenlänge der Reflexionsbande, die im folgenden als Reflexionswellenlänge bezeichnet wird, ist bestimmt durch den Brechungsindex und die Ganghöhe der helikalen Struktur, die mit zunehmender Konzentration des Chiralikums abnimmt. Zusätzlich ist die Reflexionswellenlänge vom Betrachtungswinkel abhängig. Die Breite der Bande ist durch die optische Anisotropie der mesogenen Reste der flüssigkristallinen Organosiloxane (F) und der weiteren Mischungskomponenten bestimmt. Sie liegt in den meisten Fällen zwischen 5% bis 15% der Reflexionswellenlänge. Für spezielle Anwendungen kann durch geeignete Maßnahmen bei der Filmherstellung, wie sie beispielsweise in US-A-5,506,704 oder US-A-5,691,789 beschrieben sind, eine variierende Ganghöhe der helikalen Struktur erzeugt werden, die zu einer zusätzlich verbreiterten Reflexionsbande führt. Eine große Zahl von geeigneten optisch aktiven Dotierstoffen sind in der Literatur beschrieben. Für linkshelikale Materialien wird dabei oft auf Cholesterinverbindungen zurückgegriffen, die außer der Chiralität auch ausreichend mesogene Eigenschaften mitbringen, um eine stabile Mesophase zu erzeugen. Es eignen sich beispielsweise die aus H. Finkelmann, H. Ringsdorf et al., in Makromol. Chem. 179, 829-832 (1978) bekannten Cholesterinderivate oder die aus US-A-4,996,330 bekannten Weinsäureimid-Derivate. Bei der Darstellung von rechtshelikalen Systemen wurde bislang in der Regel auf nichtsteroidale Systeme zurückgegriffen, die meist jedoch keine gute Mesophasenstabilität besitzen. Ein geeignetes rechtshelikales Steroid-System das auf Cholest-8(14)-en-3-ol (Doristerol) bzw. dessen Derivaten basiert, wird in US-A-5,695,680 beschrieben. In DE-A-43 42 280 bzw. DE-A-44 08 171 werden vernetzbare, monomere Hexit-Derivate bzw. Mischungen von monomeren Hexit-Derivaten mit anderen flüssigkristallinen Verbindungen beschrieben, die als monomere Dotierstoffe zur Herstellung von cholesterischen Netzwerken eingesetzt werden. In DE-A-196 19 460 werden Flüssigkristallmischungen beschrieben, die flüssigkristalline Organosiloxane und Dianhydrohexit-Derivate als links- oder rechtshelikale chirale Zusatzstoffe enthalten. Bei den dort beschriebenen Dianhydrohexit-Derivaten handelt es sich vorzugsweise um Verbindungen aus der Gruppe Dianhydrosorbid, Dianhydromannit und Dianhydroidit. Aus solchen CLC- Mischungen, die Organosiloxane (F) und Chiralika enthalten, können nach dem oben beschriebenen Verfahren Schichten mit cholesterischer Orientierung hergestellt werden, die zirkularpolarisiertes Licht wellenlängenselektiv reflektieren. Bei diesen Anwendungen beträgt die Dicke der LC-Schicht vorzugsweise mehr als die dreifache Ganghöhe bis zu einer maximalen Schichtdicke von 500 *µ*m. Besonders bevorzugt sind Schichtdicken von 1 *µ*m bis 50 *µ*m.

Solche Schichten mit cholesterischer Orientierung sind hervorragend für dekorative Anwendungen geeignet, wenn die Konzentration der Chiralika so gewählt ist, daß die Reflexionswellenlänge der cholesterischen Bande im sichtbaren Wellenlängenbereich liegt. Aufgrund des blickwinkelabhängigen Farbeindrucks und des metallischen Glanzes ermöglichen diese Schichten besondere Farbeffekte. Bei Anwendungen im Wertdruck und Markenschutz wird wegen dieser Farbeffekte und der Polarisation des reflektierten Lichts zusätzlich ein guter Kopierschutz erreicht.

Ein Beispiel für eine optische Anwendung ist ein planarer CLC-Filter, wie er in US-A-4,859,031 beschrieben ist. In US-A-5,682,212 ist beschrieben, wie mit cholesterischen Flüssigkristallen auf gekrümmten Substraten für sichtbares Licht bis zum nahen UV optisch abbildende, wellenlängen - und polarisationsselektive Elemente hergestellt werden können. Mögliche Anwendungsformen dieser optischen Elemente sind beispielsweise Strahlteiler, Spiegel und Linsen. Die hier verwendeten Mischungen auf der Basis nematischer flüssigkristalliner Organosiloxane (F) eignen sich bei geringer Konzentration der Chiralika besonders bevorzugt zur Herstellung von cholesterischen Filtern, die zirkularpolarisiertes Licht im infraroten Bereich (IR), d.h. bei Wellenlängen über dem Bereich des sichtbaren Lichts, reflektieren. Durch Verwendung gekrümmter Substrate wird so insbesonders die Herstellung optisch abbildender, wellenlängen - und polarisationsselektiver Elemente im IR-Bereich nach dem in US-A-5,682,212 beschriebenen Verfahren ermöglicht.

Für viele Anwendungen besonders bevorzugt sind solche IR-reflektierenden CLC-Schichten, die im Bereich des sichtbaren Lichts transparent und farblos sind. Dazu liegt die Wellenlänge der unteren Bandkante bevorzugt über 750 nm. Eine Anwendung dieser IR-CLC Schichten sind beispielsweise maschinenlesbare, für das menschliche Auge unsichtbare Beschriftungen oder Markierungen, beispielsweise Sicherheitsmarkierungen auf Wertdrucken oder im Markenschutz. Bei diesen Anwendungen ist insbesonders die Zirkularpolarisation der reflektierten IR-Strahlung vorteilhaft, da diese eine Sicherheitsmerkmal ist, das nur schwierig nachgestellt werden kann.

Eine andere Anwendung der IR-reflektierenden CLC-Schichten sind farblose und transparente Schutzschichten gegen Wärmestrahlung, beispielsweise Wärmeschutzverglasungen von Gebäuden oder Fahrzeugen. Da es bei dieser Anwendung darauf ankommt, möglichst die gesamte Wärmestrahlung zu reflektieren, werden hier bevorzugt zwei Schichten mit entgegengesetztem Drehsinn der cholesterischen Helix kombiniert, um links- und rechtshelikale Polarisation zu reflektieren. Besonders bevorzugt werden für diese Anwendung cholesterische Schichten mit Reflexionswellenlängen im IR verwendet, deren Reflexionsbande bei der Filmherstellung beispielsweise durch oben zitierte Maßnahmen zur Erzeugung einer variierenden Ganghöhe der helikalen Struktur zusätzlich verbreitert wurde.

Bei einigen der zuvor beschriebenen Anwendungen der erfindungsgemäßen optisch anisotropen Schichten ist es auch möglich, statt eines zusammenhängenden Films eine Schicht mit LC-Plättchen zu verwenden. Die speziellen optischen Effekte der flüssigkristallinen Organosiloxane (F) können auf diese Weise mit wesentlich geringeren Aufwand appliziert werden, da der Anwender konventionelle Druck- und Beschichtungstechnologien anwenden kann, statt die aufwendigere Herstellung der erfindungsgemäßen Filme, die einen Orientierungs- und Vernetzungsvorgang erfordert, selbst durchzuführen. Dazu können die LC-Plättchen wie beispielsweise in US-A-5,362,315 oder US-A-5,683,622 beschrieben, in ein geeignetes Bindemittelsystem eingearbeitet werden. Die geforderten Eigenschaften der Bindemittelsysteme, inbesonders die optischen Eigenschaften, hängen von der beabsichtigten Anwendung der LC-Plättchen ab.

Bei Anwendungen, die die polarisations- und wellenlängenselektive Reflexion von LC-Plättchen, die chirale Zusatzstoffe enthalten, ausnutzen, werden bevorzugt Bindemittel eingesetzt, die mindestens im Bereich der Reflexionswellenlänge optisch transparent sind. Für Anwendungen, die die optische Anisotropie im Bereich des sichtbaren Lichts nutzen, sind Bindemittel bevorzugt, die im gesamten sichtbaren Bereich farblos und transparent sind.

Für optische Elemente werden bevorzugt Bindemittelsysteme verwendet, deren mittlerer Brechungsindex nach dem Aushärten dem mittleren Brechungsindex der LC-Plättchen ähnlich ist. Zur Herstellung von dauerhaften Schichten, die LC-Plättchen enthalten, sind bevorzugt härtbare Bindemittelsysteme geeignet. Für spezielle Anwendungen können aber auch nicht härtbare Bindemittel, wie beispielsweise Öle und Pasten verwendet werden. Besonders bevorzugt sind Bindemittelsysteme, die die physikalischen Eigenschaften der LC-Plättchen nicht oder nur in definierter Weise verändern.

Geeignete Bindemittelsysteme sind beispielsweise polymerisierbare Harze (UP-Harze, Siliconharze, Epoxidharze), Dispersionen, lösungsmittelhaltige Lacke oder Wasserlacke, polymerisierbare LC-Silicone oder alle transparenten Kunststoffe, beispielsweise Polyvinylchlorid, Polymethylmethacrylat, Polycarbonat. Neben diesen isotropen Bindemitteln können auch flüssigkristalline Systeme als Bindemittel verwendet werden, beispielsweise flüssigkristalline Polymere oder polymerisierbare flüssigkristalline Harze, sowie polymerisierbare LC-Silicone.

Zur Herstellung einer Schicht oder einer Folie mit speziellen optische Eigenschaften werden die LC-Plättchen in ein flüssiges Bindemittel eingerührt. Die Orientierung der Plättchen parallel zur Oberfläche der Schicht geschieht wie bei der Lackierung mit flüssigkristallinen Farbpigmenten z.B. gemäß US-A-5,362,315 beim Auftragen einer dünnen Schicht des Pigment-Bindemittelgemischs auf ein Substrat oder bei der Extrusion des Gemischs. Abhängig von den Anforderungen der jeweiligen Anwendung und den Eigenschaften des Bindemittels kann der Film nach dem Aushärten vom Substrat abgelöst werden.

Die Anwendungen der erfindungsgemäßen LC-Plättchen können sich ebenso wie bei den Filmen auf eine reine Phasenverzögerung elektromagnetischer Wellen vom ultravioletten bis zum infraroten Bereich beschränken oder wenn zur Herstellung der Plättchen eine Mischung verwendet wird, die neben den Organosiloxanen (F) zusätzliche Komponenten enthält, die eine chirale nematische Phase induzieren, dann können daraus wie in US-A-5,362,315 beschrieben, auch LC-Plättchen mit flüssigkristalliner Struktur mit chiraler Phase hergestellt werden, die elektromagnetische Wellen einer bestimmten Wellenlänge zirkularpolarisiert reflektieren. Ein Beispiel für die Verwendung der erfindungsgemäßen LC-Plättchen ist die Herstellung optisch abbildender, wellenlängen - und polarisationsselektiver Elemente auf gekrümmten Substraten, wie sie in US-A-5,683,622 beschrieben ist.

Für dekorative Zwecke sind die LC-Plättchen besonders geeignet, wenn die Konzentration der Chiralika so gewählt ist, daß die Reflexionswellenlänge der cholesterischen Bande im sichtbaren Wellenlängenbereich liegt. Bei Anwendungen im Wertdruck und Markenschutz sind der blickwinkelabhängige Farbeindruck und die Polarisation des reflektierten Lichts zusätzliche Sicherheitsmerkmale. Bei gleichzeitiger Verwendung von LC-Plättchen mit links- und rechtshelikaler Struktur können dreidimensionale Drucke hergetellt werden wie beschrieben in US-A-5,599,412.

Für die Herstellung von Sicherheitsmarkierungen zum Schutz vor Fälschungen von beispielsweise Banknoten, Wertdrucken, Dokumenten oder im Markenschutz können die LC-Plättchen besonders vorteilhaft eingesetzt werden, da sie meist mit relativ geringem Aufwand in die bei diesen Anwendungen bereits existierenden Druck- oder anderen Beschichtungsprozessen inkorporiert werden können.

IR-reflektierende LC-Plättchen, die man bei geringer Konzentration an Chiralika erhält, sind für solche Anwendungen im Bereich des sichtbaren Lichts bevorzugt transparent und farblos. Die Wellenlänge der unteren Bandkante der Reflexionsbande liegt dabei bevorzugt über 750 nm. Solche LC-Plättchen sind geeignet für das menschliche Auge unsichtbare Markierungen herzustellen, die wegen ihrer guten Reflexion im IR-Bereich von Geräten mit IR-Detektoren registriert werden können. Neben der Reflexionswellenlänge kann dabei auch die Zirkularpolarisation der reflektierten Strahlung als zusätzliches Sicherheitsmerkmal detektiert werden. Die CLC-Plättchen werden für diese Anwendung bevorzugt in einem IR-transparenten Bindemittel auf ein zu markierendes Substrat aufgebracht.

Die Erfindung soll durch die folgenden Beispiele erläutert werden, ohne auf diese beschränkt zu sein.

In diesen Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

Es wurden Alkene der allgemeinen Formel (7) nach den folgenden, in der Literatur beschriebenen Vorschriften, hergestellt:
p-Hydroxybenzoesäureester und 4-(4'-Allyloxybenzoyloxy)-benzoesäure-(4-alkyl / alkoxy-phenyl)ester gemäß US-A-5,610,258, Beispiel 1 a) und 1 b) .
Allyloxybenzoesäure(4-methacryloyloxyphenyl)ester gemäß US-A-5,610,258, Beispiel 1 c)
4-Allyloxybenzoesäure -(4-R-phenyl)ester gemäß US-A- 5,610,258, Beispiel 1 d)
a) Weitere 1-(4-Allyloxybenzoyloxy)-4-(alkanoyl / cycloalkanoyloxy)benzole wurden nach folgender Vorschrift synthetisiert:
Zu einer 15%-igen siedenden Lösung von 1 Äquivalent 4-Allyloxybenzoesäure-(4-hydroxyphenyl)ester (Kurzbezeichnung ABH, hergestellt nach US-A-5,211,877) in Toluol, wurden 1,5 Äquivalente Alkan-, Chloralkyl- beziehungsweise Cycloalkancarbonsäurechlorid zugetropft. Die Lösung wurde nach beendeter Zudosierung des Säurechlorids noch 3 h auf Siedetemperatur gehalten, dann auf 90°C abgekühlt. Restsäure-und Säurechloridmengen wurden mit der äquivalenten Menge wäßriger Natronlauge zur Überführung des Säurechlorids in das Natriumsalz der entsprechenden Säure ausgewaschen und das Produkt durch Abkühlen und Zugabe von Petrolether (Siedebereich 100°C - 140°C) auskristallisiert. Der Niederschlag wurde abfiltriert, mit Petrolether 100 - 140 gewaschen und getrocknet.
Im einzelnen wurden nach dieser Vorschrift die in Tabelle 1 aufgeführten Verbindungen mit den angegebenen Ausbeuten und Phaseneigenschaften hergestellt:

| | | | |
|---|---|---|---|
| (C = kristallin, I = isotrop, LC = flüssigkristalline Phase) | | | |

| Name | Summenformel | Phasenübergänge [°C] | Ausbeute [%] |
|---|---|---|---|
| 1-(4-Allyloxybenzoyloxy)-4-cyclohexanoyloxybenzol | C₂₃H₂₄O₅ | C 114 I | 89 |
| 1-(4-Allyloxybenzoyloxy)-4-octanoyloxybenzol | C₂₄H₂₈O₅ | C 63 LC 88 I | 86 |
| 1-(4-Allyloxybenzoyloxy)-4-butanoyloxybenzol | C₂₀H₂₀O₅ | C 83 LC 108 I | 89 |
| 1-(4-Allyloxybenzoyloxy)-4-hexanoyloxybenzol | C₂₂H₂₄O₅ | C 77 LC 101 I | 82 |
| 1-(4-Allyloxybenzoyloxy)-4-heptanoyloxybenzol | C₂₃H₂₆O₅ | C 62 LC 94 I | 87 |
| 1-(4-Allyloxybenzoyloxy)-4-(2-methoxyethoxy)benzol | C₂₀H₂₀O₆ | C 90 I | 82 |
| 1-(4-Allyloxybenzoyloxy)-4-(4-acetoxy)benzol | C₁₈H₁₆O₅ | C 108 I | 75 |
| 1-(4-Allyloxybenzoyloxy)-4-(4-(3-chlorpropionyl)oxy)benzol | C₁₉H₁₇O₅ Cl | C 119 I | 85 |
| 1-(4-Allyloxybenzoyloxy)-4-(4-(3-brompropionyl)oxy)benzol | C₁₉H₁₇O₅ Br | C 122 I | 87 |
| 1-(4-Allyloxybenzoyloxy)-4-(4-(4-chlorbutanoyl)oxy)benzol | C₂₀H₁₉O₅ Cl | C 80 I | 80 |
| 1-(4-Allyloxybenzoyloxy)-4-(4-(4-(2-methoxyethyl)oxy)benzol | C₂₀H₂₀O₆ | C 90 I | 89 |

b) Verschiedene 1-(4-Allyloxybenzoyloxy)-4-(4'-R-benzoyloxy)benzole wurden nach folgender Vorschrift synthetisiert:
Zu einer 15%-igen siedenden Lösung von 1 Äquivalent 4-Allyloxybenzoesäure-(4-hydroxyphenyl)ester (hergestellt nach US-A-5,211,877) in o-Xylol, wurden 1,5 Äquivalente unsubstituiertes oder parasubstituiertes Benzoesäurechlorid zugetropft. Die Lösung wurde nach beendeter Zudosierung des Säurechlorids noch 2 h auf Siedetemperatur gehalten, dann auf 20°C abgekühlt. Das Produkt kristallisierte beim Abkühlen aus.
Der Niederschlag wurde abfiltriert, mit o-Xylol gewaschen und getrocknet.
Im einzelnen wurden nach dieser Vorschrift die in Tabelle 2 aufgeführten Verbindungen mit den angegebenen Ausbeuten und Phaseneigenschaften hergestellt:

| | | | |
|---|---|---|---|
| (C = kristallin, I = isotrop, LC = flüssigkristalline Phase) | | | |

| Name | Summenformel | Phasenübergänge [°C] | Ausbeute [%] |
|---|---|---|---|
| 1-(4-Allyloxybenzoyloxy)-4-benzoyloxybenzol | C₂₃H₁₈O₅ | C 135 LC 164 I | 94 |
| 1-(4-Allyloxybenzoyloxy)-4-(4'-methylbenzoyloxy)benzol | C₂₄H₂₀O₅ | C 157 LC 243 I | 89 |
| 1-(4-Allyloxybenzoyloxy)-4-(4'-methoxybenzoyloxy)benzol | C₂₄H₂₀O₆ | C 161 LC > 250 I | 87 |
| 1-(4-Allyloxybenzoyloxy)-4-naphthoyloxy)benzol | C₂₇H₂₀O₅ | C 154 I | 85 |

### Beispiel 2:

5,6 kg (14,7 mol) 1-(4-Allyloxybenzoyloxy)-4-cyclohexanoyloxybenzol und 1,6 kg (5,3 mol) Pentamethylcyclopentasiloxan wurden in 33 1 Toluol gelöst und bei 65°C mit 250 ppm Platincyclooctadiendichlorid, bezogen auf Pentamethylcyclopentasiloxan, versetzt. Die Lösung wurde nach Abklingen der exothermen Wärmeentwicklung 45 min lang bei 110°C gerührt. Danach wurden 3,3 kg (9,75 mol) Allyloxybenzoesäure(4-methacryloyloxyphenyl)ester, weitere 250 ppm Platincyclooctadiendichlorid und 21 g N-Nitrosophenylhydroxylamin-Aluminiumsalz (erhältlich unter Q1301 bei der Firma Wako, Neuss) versetzt und 4 h lang bei 80°C gerührt. Das Produkt wurde bei 20°C mit Petrolether ausgefällt, der Niederschlag in Toluol gelöst, feinfiltriert und getrocknet. Man erhielt 8,99 kg eines Organosiloxans (87% d. Th.) mit einer nematischen Phase zwischen einem Glaspunkt bei 31°C und einem Klärpunkt bei 100°C, sowie einer Viskosität von 11 Pas bei 90°C.

Zu einer 25%-igen Lösung von 6 kg dieses Organosiloxans in Toluol wurden 1,2 kg (3,55 mol) Allyloxybenzoesäure(4-methacryloyloxyphenyl)ester zugemischt. Die Abmischung wurde filtriert und getrocknet. Man erhielt 6,5 kg einer Organosiloxanabmischung (LC-Silcon 1) mit einer nematischen Phase zwischen einem Glaspunkt bei 9°C und einem Klärpunkt bei 94°C, sowie einer Viskosität von 1 Pas bei 90°C.

### Beispiel 3:

Zum LC-Silcon 1 aus Beispiel 2 wurden 0,5 Gew-% 2-Methyl-1-[4-(methylthio)phenyl] -2-morpholinopropanon-1 (erhältlich unter Irgacure® 907 bei der Ciba-Geigy AG) gemischt. Zwei Glasplatten wurden mit je einer Orientierungsschicht aus Polyvinylalkohol versehen, die mit einem Samttuch unidirektionell gerieben wurde. 0,1 g der Mischung wurde bei 90°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten wurde die Mischung verteilt, bis ein ca. 7 *µ*m dicker Film zwischen den Orientierungsschichten verblieb. Der Film wurde 15 Minuten bei 85°C getempert, bis eine Monodomäne mit homogener planarer Orientierung erreicht und alle Disklinationslinien verschwunden waren. Anschließend wurde er durch Bestrahlung mit UV-A-Licht (etwa 100 mW/cm² für 15 sec.) polymerisiert. Der daraus resultierende farblose und klare Film zeigte mit Hilfe der Senarmont-Methode eine optische Gangdifferenz von 960 nm bei einer Lichtwellenlänge von 633 nm.

### Beispiel 4:

121,32 g (0,3 mol) 4-(4'-Allyloxybenzoyloxy)-benzoesäure-(4-methoxyphenyl)ester, 67,34g(0,2 mol) Allyloxybenzoesäure(4-methacryloyloxyphenyl)ester, 0,22 g N-Nitrosophenylhydroxylamin-Aluminiumsalz und 33,06 g (0,11 mol) Pentamethylcyclopentasiloxan wurden in 480 ml Toluol gelöst. Die Lösung wurde auf 70°C aufgeheizt und mit 200 ppm Platincyclopentadienyldichlorid bezogen auf Pentamethylcyclopentasiloxan versetzt und 25 h bei 75°C gerührt. Nach 12 h und nach 19 h wurden jeweils 0,02 g Platinkatalysator nachdosiert. Das Lösemittel wurde entfernt, der Rückstand in Tetrahydrofuran gelöst und das Produkt mit Ethanol ausgefällt. Der Niederschlag wurde getrocknet. Man erhielt 175,10 g (80% d. Th.) eines Organosiloxans mit einer nematischen Phase zwischen einem Glaspunkt bei 35°C und einem Klärpunkt bei 210°C.

### Beispiel 5:

42,12 g (0,113 mol) 1-(4-Allyloxybenzoyloxy)-4-benzoyloxybenzol, 31,42 g (0,113 mol) Allyloxybenzoesäure-(4-cyanophenyl)ester und 23,70 g (0,079 mol) Pentamethylcyclopentasiloxan wurden in 300 ml Toluol gelöst und bei 100°C mit 200 Gewichts-ppm Platincyclopentadienyldichlorid, bezogen auf Pentamethylcyclopentasiloxan, versetzt. Die Lösung wurde 35 min lang bei 110°C gerührt, danach auf 20°C abgekühlt und mit 50,75 g (0,150 mol) Allyloxybenzoesäure(4-methacryloyloxyphenyl)ester, 150 Gewichts-ppm Platincyclopentadienyldichlorid, bezogen auf Pentamethylcyclopentasiloxan, und 0,22 g N-Nitrosophenylhydroxylamin-Aluminiumsalz versetzt, 11 h lang bei 75°C gerührt und das Produkt aus der abgekühlten Reaktionslösung mit Petrolether ausgefällt. Der Niederschlag wurde getrocknet. Man erhielt 121,86 g (83% d. Th.) eines Organosiloxans mit einer nematischen Phase zwischen einem Glaspunkt bei 34°C und einem Klärpunkt bei 123°C.

### Beispiel 6:

17,0 g (0,045 mol) 1-(4-Allyloxybenzoyloxy)-4-benzoyloxybenzol, und 7,2 g (0,024 mol) Pentamethylcyclopentasiloxan wurden in 45 ml Toluol gelöst und bei 80°C mit 0,23 ml einer 1%-igen Lösung von Platincyclopentadienyldichlorid in Methylenchlorid versetzt. Die Lösung wurde 45 min lang bei 105°C gerührt, danach auf 60°C abgekühlt und mit 23,1 g (0,068 mol) Allyloxybenzoesäure (4-methacryloyloxyphenyl)ester, 0,24 ml 1%-iger Platincyclopentadienyldichlorid-Lösung in Methylenchlorid, 45 ml Toluol und 46,88 mg N-Nitrosophenylhydroxylamin-Aluminiumsalz versetzt und 2 h lang bei 70°C gerührt. Aus der abgekühlten Reaktionslösung wurde das Produkt mit Petrolether ausgefällt. Der Niederschlag wurde in Toluol gelöst, feinfiltriert und gefriergetrocknet. Man erhielt 40,3 g (86% d. Th.) eines Organosiloxans mit einer nematischen Phase zwischen einem Glaspunkt bei 37°C und einem Klärpunkt bei 113°C. Aus diesem Organosiloxans wurde wie in Beispiel 3 beschrieben eine ca. 5 *µ* m dicke orientierte und vernetzte Schicht hergestellt. Eine vollständige Orientierung wurde dabei nach 15 Minuten Tempern bei 90°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 7:

37,44 g (0,1 mol) 1-(4-Allyloxybenzoyloxy)-4-benzoyloxybenzol, und 10,52 g (0,035 mol) Pentamethylcyclopentasiloxan wurden in 75 ml Toluol gelöst und bei 80°C mit 0,35 ml einer 1%-igen Lösung von Platincyclopentadienyldichlorid in Methylenchlorid versetzt. Die Lösung wurde 45 min lang bei 105°C gerührt, danach auf 60°C abgekühlt und mit 22,56 g (0,067 mol)

Allyloxybenzoesäure(4-methacryloyloxyphenyl)ester, 0,35 ml 1%-iger Platincyclopentadienyldichlorid-Lösung in Methylenchlorid, 75 ml Toluol und 70,52 mg N-Nitrosophenylhydroxylamin-Aluminiumsalz versetzt und 90 min lang bei 75°C gerührt. Die Lösung wurde filtriert, das Lösemittel entfernt und der Rückstand gefriergetrocknet. Man erhielt 59,5 g (85% d. Th.) eines Organosiloxans (LC-Silicon 2) mit einer nematischen Phase zwischen einem Glaspunkt bei 42°C und einem Klärpunkt bei 146°C.

Aus diesem Organosiloxans wurde wie in Beispiel 3 beschrieben eine ca. 5 *µ*m dicke orientierte und vernetzte Schicht hergestellt. Eine vollständige Orientierung wurde dabei nach 15 Minuten Tempern bei 90°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 8:

Zu einer 25%-igen Lösung von 50 g des LC-Silicons 2 aus Beispiel 7 in Toluol wurden 7,5 g Allyloxybenzoesäure(4-methacryloyloxyphenyl)ester sowie 0,5 Gew-% Photoinitiator Irgacure® 907 zugemischt. Die Abmischung wurde filtriert und getrocknet. Man erhielt 55 g einer Organosiloxanabmischung mit einer nematischen Phase zwischen einem Glaspunkt bei 28°C und einem Klärpunkt bei 134°C, sowie einer Viskosität von 2,7 Pas bei 90°C.

Aus diesem Organosiloxans wurde wie in Beispiel 3 beschrieben eine ca. 5 *µ*m dicke orientierte und vernetzte Schicht hergestellt. Eine vollständige Orientierung wurde dabei nach 10 Minuten Tempern bei 90°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen. Mit Hilfe der Sénarmont-Methode wurde eine optische Gangdifferenz von 825 nm bei einer Lichtwellenlänge von 633 nm gemessen.

### Beispiel 9:

Ein Gemisch aus 5,95 g (0,015 mol) 1-(4-Allyloxybenzoyloxy)-4-octanoyloxybenzol, 5,52 g (0,015 mol) 1-(4-Allyloxybenzoyloxy)-4-hexanoyloxybenzol, 5,74 g (0,015 mol) 1-(4-Allyloxybenzoyloxy)-4-heptanoyloxybenzol und 4,87 g (0,016 mol) Pentamethylcyclopentasiloxan wurden in 100 ml Toluol gelöst und bei 80°C mit einer 1%-igen Lösung von Platincyclopentadienyldichlorid in 0,15 ml Methylenchlorid versetzt. Die Lösung wurde 45 min lang bei 105°C gerührt, danach auf 60°C abgekühlt und mit 10,15 g (0,03 mol) Allyloxybenzoesäure(4-methacryloyloxyphenyl)ester, 0,15 ml 1%-iger Platincyclopentadienyldichlorid-Lösung in Methylenchlorid und 32 mg N-Nitrosophenylhydroxylamin-Aluminiumsalz versetzt und 90 min lang bei 75°C gerührt. Die Lösung wurde filtriert, das Lösemittel entfernt und der Rückstand gefriergetrocknet. Man erhielt 22,8 g (71% d. Th.) eines Organosiloxans mit einer nematischen Phase zwischen einem Glaspunkt bei 20°C und einem Klärpunkt bei 102°C.

Aus diesem Organosiloxans wurde wie in Beispiel 3 beschrieben eine ca. 5 *µ*m dicke orientierte und vernetzte Schicht hergestellt. Eine vollständige Orientierung wurde dabei nach 5 Minuten Tempern bei 88°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 10:

Ein Gemisch aus 4,46 g (0,0113 mol) 1-(4-Allyloxybenzoyloxy)-4-octanoyloxybenzol, 4,14 g (0,0113 mol) 1-(4-Allyloxybenzoyloxy)-4-hexanoyloxybenzol, 4,30 g (0,0113 mol) 1-(4-Allyloxybenzoyloxy)-4-heptanoyloxybenzol, 4,28 g (0,0113 mol) 1-(4-Allyloxybenzoyloxy)-4-cyclohexanoyloxybenzol und 4,87 g (0,016 mol) Pentamethylcyclopentasiloxan wurden in 100 ml Toluol gelöst und bei 80°C mit 0,15 ml einer 1%-igen Lösung von Platincyclopentadienyldichlorid in Methylenchlorid versetzt. Die Lösung wurde 45 min lang bei 105°C gerührt, danach auf 60°C abgekühlt und mit 10,15 g (0,03 mol) Allyloxybenzoesäure(4-methacryloyloxyphenyl)ester, 0,15 ml 1%-iger Platincyclopentadienyldichlorid-Lösung in Methylenchlorid und 32 mg N-Nitrosophenylhydroxylamin-Aluminiumsalz versetzt und 90 min lang bei 75°C gerührt. Die Lösung wurde filtriert, das Lösemittel entfernt und der Rückstand gefriergetrocknet. Man erhielt 22,9 g (71% d. Th.) eines Organosiloxans mit einer nematischen Phase zwischen einem Glaspunkt bei 20°C und einem Klärpunkt bei 100°C und einer Viskosität von 2,4 Pas bei 90°C. Aus diesem Organosiloxans wurde wie in Beispiel 3 beschrieben eine ca. 7 *µ*m dicke orientierte und vernetzte Schicht hergestellt. Eine vollständige Orientierung wurde dabei nach 12 Minuten Tempern bei 88°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 11:

Ein Gemisch aus 11,2 g (0,03 mol) 1-(4-Allyloxybenzoyloxy)-4-benzoyloxybenzol, 11,47 g (0,03 mol) 1-(4-Allyloxybenzoyloxy)-4-heptanoyloxybenzol, 11,89 g (0,032 mol) 1-(4-Allyloxybenzoyloxy)-4-hexanoyloxybenzol und 9,74 g (0,032 mol) Pentamethylcyclopentasiloxan wurden in 100 ml Toluol gelöst und bei 80°C mit 0,28 ml einer 1%-igen Lösung von Platincyclopentadienyldichlorid in Methylenchlorid versetzt. Die Lösung wurde 45 min lang bei 105°C gerührt, danach auf 60°C abgekühlt und mit 20,30 g (0,06 mol) Allyloxybenzoesäure(4-methacryloyloxyphenyl)ester, 0,28 ml 1%-iger Platincyclopentadienyldichlorid-Lösung in Methylenchlorid und 64 mg N-Nitrosophenylhydroxylamin-Aluminiumsalz versetzt und 90 min lang bei 75°C gerührt. Die Lösung wurde filtriert, das Lösemittel entfernt und der Rückstand gefriergetrocknet. Man erhielt 45,2 g (80% d. Th.) eines Organosiloxans mit einer nematischen Phase zwischen einem Glaspunkt bei 22°C und einem Klärpunkt bei 114°C.

Die Substanz wurde in 100 ml p-Xylol aufgelöst, mit 9,04 g (0,028 mol) Allyloxybenzoesäure(4-methacryloyloxyphenyl)ester und 0,5 Gew-% des Photoinitiators Irgacure® 907 versetzt, filtriert und gefriergetrocknet. Das Gemisch zeigte eine nematische Phase mit Klärpunkt bei 98°C.

Aus diesem Organosiloxans wurde wie in Beispiel 3 beschrieben eine ca. 6 *µ*m dicke orientierte und vernetzte Schicht hergestellt. Eine vollständige Orientierung wurde dabei nach 2 Minuten Tempern bei 90°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 12:

Ein Gemisch aus 30,4 g (0,075 mol) 1-(4-Allyloxybenzoyloxy)-4-(4'-methoxybenzoyloxy)benzol, 27,7 g (0,075 mol) 1-(4-Allyloxybenzoyloxy)-4-hexanoyloxybenzol, 28,7 g (0,075 mol) 1-(4-Allyloxybenzoyloxy)-4-heptanoyloxybenzol und 24,4 g (0,08 mol) Pentamethylpentacyclosiloxan wurden in 500 ml Toluol gelöst und bei 80°C mit 7,5 ml einer 1%-igen Lösung von Platincyclopentadienyldichlorid in Methylenchlorid versetzt. Die Lösung wurde 45 min lang bei 105°C gerührt, danach auf 60°C abgekühlt und mit 50,8 g (0, 15 mol) Allyloxybenzoesäure(4-methacryloyloxyphenyl)ester, 750 ml 1%-iger Platincyclopentadienyldichlorid-Lösung in Methylenchlorid und 160 mg N-Nitrosophenylhydroxylamin-Aluminiumsalz versetzt und 90 min lang bei 75°C gerührt. Die Lösung wurde filtriert, das Lösemittel entfernt und der Rückstand gefriergetrocknet. Man erhielt 128 g (80% d. Th.) eines Organosiloxans (LC-Silicon 3) mit einer nematischen Phase zwischen einem Glaspunkt bei 25°C und einem Klärpunkt bei 139°C sowie einer Viskosität von 3,6 Pas bei 90°C.

### Beispiel 13:

12,8 g des LC-Silicons 3 aus Beispiel 12 wurden in 100 ml p-Xylol aufgelöst und es wurden 2,6 g Allyloxybenzoesäure(4-methacryloyloxyphenyl)ester sowie 0,5 Gew-% Photoinitiator Irgacure 907 zugegeben. Nach Filtration und Gefriertrocknung der Lösung erhielt man 14 g einer Organosiloxanabmischung (LC-Silicon 4) mit einer nematischen Phase zwischen einem Glaspunkt bei 7°C und einem Klärpunkt bei 130°C, sowie einer Viskosität von 0,6 Pas bei 90°C.

Zwei Glasplatten wurden mit je einer Orientierungsschicht aus Polyvinylalkohol versehen, die mit einem Samttuch unidirektionell gerieben wurde. 0,2 g der Organosiloxanabmischung wurde bei 100°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten wurde die Mischung verteilt, bis ein ca. 10 *µ*m dicker Film zwischen den Orientierungsschichten verblieb.

Der Film wurde 4 Minuten bei 100°C getempert bis alle Disklinationslinien verschwunden waren und anschließend durch Bestrahlung mit UV-A-Licht (etwa 100 mW/cm² für 15 sec.) polymerisiert. Der daraus resultierende farblose und klare Film zeigte mit Hilfe der Sénarmont-Methode eine optische Gangdifferenz von 1430 nm bei einer Lichtwellenlänge von 633 nm. In einem Abbe-Refraktrometer wurde als mittlerer Brechungsindex des Films 1,57 gemessen.

### Beispiel 14:

Weitere 12,8 g des LC-Silicons 3 aus Beispiel 12 wurden in 100 ml p-Xylol aufgelöst und es wurden 3,2 g Hydroxybenzoesäure-(4-ethylphenyl)ester sowie 0,5 Gew-% Photoinitiator Irgacure® 907 zugegeben. Nach Filtration und Gefriertrocknung der Lösung erhielt man 15 g einer nematischen Organosiloxanabmischung mit einem Klärpunkt bei 102°C.

Aus diesem Organosiloxans wurde wie in Beispiel 3 beschrieben eine ca. 7 *µ*m dicke orientierte und vernetzte Schicht hergestellt. Eine vollständige Orientierung wurde dabei nach 1 Minute Tempern bei 90°C erreicht. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 15 (Vergleichsbeispiel):

Ein flüssigkristallines Organosiloxan gemäß Beispiel 3, Zeile 40 - 59 aus US 5,610,258 (mit drei dreikernigen und einem zweikernigen Mesogen mit Glaspunkt bei 30°C und Klärpunkt bei 172°C ) wurde wie in Beispiel 3 beschrieben bei 90°C zwischen zwei Glasplatten mit Orientierungsschichten so aufgetragen, daß ein ca. 5 *µ*m dicker Film entstand. Nach 20 Minuten Tempern bei 90°C war noch keine homogene planare Orientierung erreicht. Der Film war trüb durch viele Disklinationslinien, an denen das Licht gestreut wurde. Zwischen gekreuzten Polarisationsfiltern zeigte der Film eine optische Anisotropie, es wurde jedoch keine eindeutige Dunkelstellung durch parallele Ausrichtung der Polarisationsachsen mit der Reibrichtung der Orientierungsschicht erreicht.

### Beispiel 16:

1,5 g des LC-Silicons 4 aus Beispiel 13 wurden in 6 g Toluol aufgelöst und durch Spincoating auf eine Glasplatte mit einer Orientierungsschicht aus Polyvinylalkohol, die zuvor mit einem Samttuch unidirektionell gerieben wurde, aufgebracht. Nach 10 Minuten Trocknen und Orientieren in einem Vakuumtrockenschrank bei 90°C entstand ein ca. 0,6 *µ*m dicker Film, der anschließend durch Bestrahlung mit UV-A-Licht (etwa 100 mW/cm² für 15 sec.) polymerisiert wurde. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen, wie sie durch eine Hybridorientierung der Mesogene in einer durch die Normale zur Filmebene und die Reibrichtung der Orientierungsschicht definierten Ebene mit einem mittleren Neigungswinkel von 20° relativ zur Filmebene erzeugt wird.

Die Winkelabhängigkeit der optischen Verzögerung eines Helium-Neon Laserstrahls wurde im Winkelbereich von 0° bis 360° in 10°-Schritten in einer durch die Normale zur Filmebene und die Reibrichtung der Orientierungsschicht definierten Ebene mit Hilfe der Senarmontmethode gemessen. Dazu wurde die Probe um eine Achse in der Filmebene senkrecht zur Reibrichtung gedreht. Senkrecht zur Filmebene betrug die Verzögerung 68 nm, bei einem Einfallswinkel von 40° zur Normalen war die Verzögerung 84 nm und bei -40° war die Verzögerung 46 nm.

### Beispiel 17:

2 g des LC-Silicons 4 aus Beispiel 13 wurden in 8 g Toluol aufgelöst und mit einer Kammerrakel mit einer Spalthöhe von 30 *µ*m auf einem Ziehgerät auf eine Cellulose-tri-acetat-Folie (Triphan®, Hersteller: Lonza) ohne eigene optische Anisotropie aufgerakelt. Nach 20 Minuten Trocknen und Orientieren in einem Vakuumtrockenschrank bei 90°C entstand ein ca. 5 *µ*m dicker Film, der anschließend durch Bestrahlung mit UV-A-Licht (etwa 100 mW/cm² für 15 sec.) polymerisiert wurde. Der farblose und klare Film zeigte zwischen gekreuzten Polarisationsfiltern eine deutliche optische Anisotropie mit Dunkelstellung bei paralleler Ausrichtung der Reibrichtung der Orientierungsschicht zu einer der Polarisationsachsen.

### Beispiel 18:

8,6 g des LC-Silicons 3 aus Beispiel 12 wurden in 100 ml p-Xylol aufgelöst und es wurden 1,8 g Allyloxybenzoesäure(4-methacryloyloxyphenyl)ester, 0,1 g Methacrylsäurecholesterinester sowie 0,5 Gew-% Photoinitiator Irgacure 907 zugegeben. Nach Filtration und Gefriertrocknung der Lösung erhielt man 9 g einer Organosiloxanabmischung (LC-Silicon 5).

Zwei Glasplatten wurden mit je einer Orientierungsschicht aus Polyvinylalkohol versehen, die mit einem Samttuch unidirektionell gerieben wurde. 0,1 g der Organosiloxanabmischung wurde bei 100°C auf die Orientierungsschicht einer der Glasplatten aufgetragen und mit der zweiten Platte so abgedeckt, daß die Reibrichtungen senkrecht zueinander lagen. Durch gleichmäßigen Druck auf die Platten wurde die Mischung verteilt, bis ein ca. 9 *µ*m dicker Film zwischen den Orientierungsschichten verblieb. Der Film wurde 4 Minuten bei 100°C getempert bis alle Disklinationslinien verschwunden waren und anschließend durch Bestrahlung mit UV-A-Licht (etwa 100 mW/cm² für 15 sec.) polymerisiert. Der daraus resultierende farblose und klare Film zeigte zwischen gekreuzten Polarisationsfiltern eine deutliche optische Anisotropie mit Hellstellung bei paralleler Ausrichtung der Reibrichtung der Orientierungsschicht zu einer der Polarisationsachsen. Zwischen parallelen Polarisationsfiltern wurde bei paralleler Ausrichtung der Reibrichtung der Orientierungsschicht zu einer der Polarisationsachsen eine Dunkelstellung beobachtet. Die gedrehte Orientierung der Mesogene in dieser Schicht entspricht der Orientierung in einem TN-LCD ohne elektrisches Feld.

### Beispiel 19:

12,8 g des LC-Silicons 3 aus Beispiel 12 wurden in 100 ml p-Xylol aufgelöst und es wurden 2,6 g Allyloxybenzoesäure(4-methacryloyloxyphenyl)ester, 0,82 g Isosorbid-bis(4-allyloxybenzoat) sowie 1 Gew-% Photoinitiator Irgacure® 907 zugegeben. Nach Filtration und Gefriertrocknung der Lösung erhielt man 15 g einer Organosiloxanabmischung (LC-Silicon 6). Zwei Glasplatten wurden mit je einer Orientierungsschicht aus Polyvinylalkohol versehen, die mit einem Samttuch unidirektionell gerieben wurde. 0,1 g der Organosiloxanabmischung wurde bei 90°C auf die Orientierungsschicht einer der Glasplatten aufgetragen und mit der zweiten Platte so abgedeckt, daß die Reibrichtungen senkrecht zueinander lagen. Durch gleichmäßigen Druck auf die Platten wurde die Mischung verteilt, bis ein ca. 12 *µ*m dicker Film zwischen den Orientierungsschichten verblieb. Der Film wurde 5 Minuten bei 80°C getempert bis alle Disklinationslinien verschwunden waren und anschließend durch Bestrahlung mit UV-A-Licht (etwa 100 mW/cm² für 15 sec.) polymerisiert.

In einem mit Zirkularpolarisatoren ausgestattetem Photospektrometer wurde das von dem so hergestellten, klaren und bei senkrechter Betrachtung farblosen Film durchgelassene sowie reflektierte Licht vermessen. Es wurde eine selektive Reflexion von linkshelikaler IR-Strahlung bei der Wellenlänge 761 nm nachgewiesen. Die Halbwertsbreite der Reflexionsbande betrug 72 nm.

### Beispiel 20:

12,8 g des LC-Silicons 3 aus Beispiel 12 wurden in 100 ml p-Xylol aufgelöst und es wurden 2,6 g Allyloxybenzoesäure(4-methacryloyloxyphenyl)ester, 0,82 g Isomannid-bis (4-allyloxybenzoat) sowie 1 Gew-% Photoinitiator Irgacure® 907 zugegeben. Nach Filtration und Gefriertrocknung der Lösung erhielt man 15 g einer Organosiloxanabmischung.

Zwei Glasplatten wurden mit je einer Orientierungsschicht aus Polyvinylalkohol versehen, die mit einem Samttuch unidirektionell gerieben wurde. 0,1 g der Organosiloxanabmischung wurde bei 90°C auf die Orientierungsschicht einer der Glasplatten aufgetragen und mit der zweiten Platte so abgedeckt, daß die Reibrichtungen senkrecht zueinander lagen. Durch gleichmäßigen Druck auf die Platten wurde die Mischung verteilt, bis ein ca. 11 *µ*m dicker Film zwischen den Orientierungsschichten verblieb. Der Film wurde 10 Minuten bei 80°C getempert und anschließend durch Bestrahlung mit UV-A-Licht (etwa 100 mW/cm² für 15 sec.) polymerisiert.

In einem mit Zirkularpolarisatoren ausgestattetem Photospektrometer wurde das von dem so hergestellten, klaren und farblosen Film durchgelassene sowie reflektierte Licht vermessen. Es wurde eine selektive Reflexion von rechtshelikaler IR-Strahlung bei der Wellenlänge 1283 nm nachgewiesen. Die Halbwertsbreite der Reflexionsbande betrug 125 nm.

### Beispiel 21:

20,5 g (0,054 mol) 1-(4-Allyloxybenzoyloxy)-4-cyclohexanoyloxybenzol, 3,3 g (0,008 mol) 2-(4-Allyloxybenzoyl)-5-(4-methylbenzoyl)-isosorbid und 10,0 g (0,039 mol) Tetramethyltetracyclosiloxan wurden in 500 ml Toluol gelöst und bei 100°C mit 200 Gewichts-ppm Platincyclopentadienyldichlorid, bezogen auf Tetramethyltetracyclosiloxan, versetzt. Die Lösung wurde 120 min lang bei 110°C gerührt, danach auf 20°C abgekühlt und mit 32,2 g (0,095 mol) Allyloxybenzoesäure(4-methacryloyloxyphenyl)ester, 300 Gewichts-ppm Platincyclopentadienyldichlorid, bezogen auf Tetramethyltetracyclosiloxan, und 0,22 g N-Nitrosophenylhydroxylamin-Aluminiumsalz versetzt, 4 h lang bei 75°C gerührt und das Produkt aus der abgekühlten Reaktionslösung einmal mit Petrolether und einmal mit Ethanol ausgefällt. Der Niederschlag wurde getrocknet. Man erhielt 33,5 g (51% d. Th.) eines Organosiloxans mit einer cholesterischen Phase zwischen einem Glaspunkt bei 27°C und einem Klärpunkt bei 88°C.

10 g des Organosiloxans wurden in 100 ml p-Xylol aufgelöst und es wurden 1 Gew-% Photoinitiator Irgacure® 907 zugegeben. Nach Filtration und Gefriertrocknung der Lösung erhielt man 9 g einer Organosiloxanabmischung.

Zwei Glasplatten wurden mit je einer Orientierungsschicht aus Polyvinylalkohol versehen, die mit einem Samttuch unidirektionell gerieben wurde. 0,2 g der Organosiloxanabmischung wurde bei 90°C auf die Orientierungsschicht einer der Glasplatten aufgetragen und mit der zweiten Platte so abgedeckt, daß die Reibrichtungen senkrecht zueinander lagen. Durch gleichmäßigen Druck auf die Platten wurde die Mischung verteilt, bis ein ca. 10 *µ*m dicker Film zwischen den Orientierungsschichten verblieb. Der Film wurde 10 Minuten bei 80°C getempert und anschließend durch Bestrahlung mit UV-A-Licht (etwa 100 mW/cm² für 15 sec.) polymerisiert.

In einem mit Zirkularpolarisatoren ausgestattetem Photospektrometer wurde das von dem so hergestellten, klaren und bei senkrechter Betrachtung farblosen Film durchgelassene sowie reflektierte Licht vermessen. Es wurde eine selektive Reflexion von linkshelikaler IR-Strahlung bei der Wellenlänge 945 nm nachgewiesen. Die Halbwertsbreite der Reflexionsbande betrug 93 nm.

### Beispiel 22:

Aus 10 g des LC-Silicons 6 wurde wie in Beispiel 19 beschrieben ein ca. 12 *µ*m dicker orientierter und polymerisierter Film hergestellt. Die Glasplatten wurden auseinandergesprengt und der LC-Siliconfilm wurde mit einer Stahlklinge vom Glassubstrat abgeschabt. Die verbleibenden Partikel wurden in einer Laboruniversalmühle bis zu einem mittleren Korndurchmesser von etwa 50 *µ*m gemahlen. Die so gewonnene pulverförmige Fraktion wurde anschließend mittels eines Analysensiebes mit einer Maschenweite von 50 *µ*m gesiebt und dann in ein konventionelles Alkyd-Melamin-Harzbindemittel-System (käuflich erhältlich unter Sacolyd® F 410/Sacopal® M 110 bei Kolms Chemie, A-Krems) eingearbeitet. Die Viskosität des Bindemittelsystems wurde mit einem Verdünner (Mischung aus aromatischen Kohlenwasserstoffen und Methylisobutylketon) in einem DIN-4-Auslaufbecher auf eine Auslaufzeit von ca. 80 sec eingestellt.

Die so erhaltene Mischung aus LC-Plättchen und Bindemittel wurde auf ein Schwarz-weiß-Papier (BYK Gardner) mit Hilfe eines Filmziehgerätes (Fa. Erichsen) in einer Naßfilmschichtdicke von 120 *µ*m aufgerakelt. Anschließend wurde das Papier eine Stunde bei 80°C getrocknet. Die Papieroberfläche blieb nach dem Trocknen weiterhin schwarz und weiß. In einem mit Zirkularpolarisatoren ausgestattetem Photospektrometer wurde das unter einem Winkel von 10° zur Normalen der Papieroberfläche reflektierte Licht vermessen. Es wurde eine selektive Reflexion von linkshelikaler IR-Strahlung bei der Wellenlänge 750 nm nachgewiesen.

## Patentansprüche

1. Nematische Organosiloxane (F), die 2 bis 15 Siliziumatome enthalten und die mindestens zwei Einheiten der allgemeinen Formel (1)
[MR¹ ₚSiO_{q/2}] (1)
enthalten, in denen unabhängig voneinander jeweils entweder p=1 und q=2 oder p=2 und q=1 ist,
**R**^{**1**} C₁- bis C₁₀-Kohlenwasserstoffreste bedeutet und in denen
M mesogene Seitengruppen der allgemeinen Formel (2)
R²-X¹-(A¹-X²)ₐ-R³-A² (2)
sind, wobei in der vorstehenden Formel (2)
**R**^{**2**} einen Rest der Formel (CH₂)ₙ bedeutet, in dem n eine ganze Zahl im Wert von 2 bis 10 ist, wobei eine oder.mehrere, einander nicht benachbarte Methyleneinheiten durch Sauerstoffatome oder Dimethylsilylreste ersetzt sein können,
**R**^{**3**} eine chemische Bindung oder einen Rest der Formel (CH₂)ₘ bedeutet, in dem m eine ganze Zahl im Wert von 1 bis 12 ist, wobei eine oder mehrere, einander nicht benachbarte Methyleneinheiten durch Sauerstoffatome oder Dimethylsilylreste ersetzt sein können,
**X**^{**1**} eine chemische Bindung ist oder ausgewählt wird-aus zweibindigen Resten der Gruppe -O-, -COO- und -OCO-,
**X**^{**2**} gleiche oder verschiedene Bindungsgruppen bedeutet, die unabhängig voneinander ausgewählt sind aus der Gruppe der chemischen Bindung und zweibindigen Resten der Gruppe -COO-, -OCO-, -CH₂CH₂-, -CH=N-, -N=CH-, -N=N-, -CONH-, -HONC-, -C≡C-, -CH=CH-, -N=N(O)- und -N(O)=N-,
**A**^{**1**} gleiche oder verschiedene Kerne bedeutet, die unabhängig voneinander ausgewählt werden aus zweibindigen Resten der Gruppe 1,4-Phenylen, 1,4-Cyclohexylen, 2,5-Pyridinylen, 2,5-Pyranylen, 2,5-Pyrimidinylen, 5,2-Pyrimidinylen, 2,5-(1,3- Dioxanylen), 5,2- (1,3- Dioxanylen), 2,6-Naphthyliden, 2,7-Naphthyliden und 1,4-Naphthyliden,
**A**^{**2**} eine Endgruppe bedeutet, die ausgewählt wird aus der Gruppe der Wasserstoffatome, Halogenatome, Hydroxyl-, Phenyl-, Acryloyloxy-, (Meth)acryloyloxy-, (Meth) acrylethylenoxyreste und der Cyclohexanreste und
a die Werte 2 oder 3 annehmen kann. mit der Maßgabe, daß von den mesogenen Seitengruppen **M** höchstens eine drei Kerne **A**^{**1**} besitzt und alle anderen zwei Kerne **A**^{**1**} besitzen, und mindestens eine der mesogenen Seitengruppen **M** eine Methacryl- oder Acrylgruppe enthält.

2. Organosiloxane (F) nach Anspruch 1, bei denen der Anteil der mesogenen Seitengruppen, die Methacryl- oder Acrylgruppen aufweisen, mindestens 10 % beträgt.

3. Organosiloxane (F) nach Anspruch 1 oder 2, welche Einheiten der Formel R¹₂Si und gegebenenfalls R¹₃Si enthalten.

4. Organosiloxane (F) nach Anspruch 1 bis 3, bei denen eine mesogene Seitengruppe drei Kerne besitzt

5. Organosiloxane (F) nach Anspruch 1 bis 4, welche mesogene Seitengruppen der allgemeinen Formel (3) 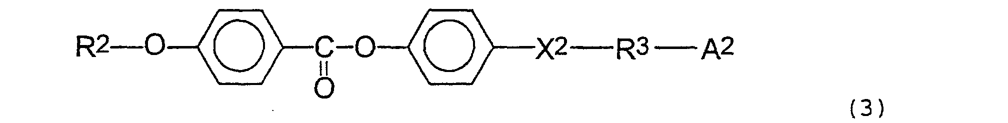 enthalten, wobei **R**^{**2**}**, X**^{**2**}**, R**^{**3**} und **A**^{**2**} die für die Formel (2) gemäß Anspruch 1 angegebenen Bedeutungen haben.

6. Verfahren zur Herstellung der Organosiloxane (F) gemäß Anspruch 1 bis 5, bei dem
Organosiloxane, die mindestens zwei Einheiten der allgemeinen Formel (6)
[HR¹ ₚSiO_{q/2}] (6)
enthalten, in denen unabhängig voneinander jeweils entweder p=1 und q=2 oder p=2 und q=1 ist,
mit mesogene Reste aufweisenden Alkenen der allgemeinen Formel 7
R⁷-X¹-(A¹-X²)ₐ-R³-A² (7)
umgesetzt werden, wobei in den vorstehenden allgemeinen Formeln
(6) und (7)
**R**^{**1**}**,R**^{**3**}**, X**^{**1**}**, X**^{**2**}**, A**^{**1**}**, A**^{**2**}**,** und **a** die für die allgemeinen Formeln (1) und (2) angegebenen Bedeutungen haben und
**R**^{**7**} einen Rest der Formel H₂C = CH-CₖH₂ₖ₋₁ bedeutet, in dem **k** eine ganze Zahl im Wert von 1 bis 8 ist, wobei eine oder mehrere, einander nicht benachbarte Methyleneinheiten durch Sauerstoffatome oder Dimethylsilylreste ersetzt sein können,
mit der Maßgabe, daß von den Alkenen der allgemeinen Formel 7 höchstens eines drei Kerne **A**^{**1**} besitzt und alle anderen zwei Kerne **A**^{**1**} besitzen, und mindestens eines der Alkene der allgemeinen Formel 7 eine Methacryl- oder Acrylgruppe enthält.

7. Verwendung der Organosiloxane (F) gemäß Anspruch 1 bis 5, zur Herstellung von optisch anisotropen Schichten.

## Claims

1. Nematic organosiloxanes (F) which contain from 2 to 15 silicon atoms and at least two units of the general formula (1)
[MR¹ ₚSiO_{q/2}] (1)
in which, independently of one another in each case either p = 1 and q = 2 or p = 2 and q = 1,
**R**^{**1**} is C₁- to C₁₀-hydrocarbon radicals, and in which
**M** are mesogenic side groups of the general formula (2)
R²-X¹-(A¹-X²)ₐ-R³-A² (2)
where, in the above formula (2),
**R**^{**2**} is a radical of the formula (CH₂)ₙ, where n is an integer having a value of from 2 to 10 and in which one or more methylene units which are not adjacent to one another may be replaced by oxygen atoms or dimethylsilyl radicals,
**R**^{**3**} is a chemical bond or a radical of the formula (CH₂)ₘ, where m is an integer having a value of from 1 to 12 and in which one or more methylene units which are not adjacent to one another may be replaced by oxygen atoms or dimethylsilyl radicals,
**X**^{**1**} is a chemical bond or is selected from divalent radicals from the group consisting of -O-, -COO- and -OCO-,
**X**^{**2**} are identical or different linking groups which are selected independently of one another from the group consisting of the chemical bond and divalent radicals from the group consisting of -COO-, -OCO-, -CH₂CH₂-, -CH=N-, -N=CH-, -N=N-, -CONH-, -HONC-, -C≡C -, -CH=CH-, -N=N(O)- and -N(O)=N-,
**A**^{**1**} are identical or different nuclei which are selected independently of one another from divalent radicals from the group consisting of 1,4-phenylene, 1,4-cyclohexylene, 2,5-pyridinylene, 2,5-pyranylene, 2, 5-pyrimidinylene, 5,2-pyrimidinylene, 2,5-(1,3-dioxanylene), 5,2-(1,3-dioxanylene), 2, 6-naphthylidene, 2,7-naphthylidene and 1,4-naphthylidene,
**A**^{**2**} is an end group which is selected from the group consisting of hydrogen atoms, halogen atoms, hydroxyl, phenyl, acryloyloxy, (meth)acryloyloxy, (meth)acrylethyleneoxy and cyclohexyl radicals, and
**a** can adopt a value of 2 or 3,
with the proviso that of the mesogenic side groups **M** at most one has three nuclei **A**^{**1**} and all the others have two nuclei **A**^{**1**}**,** and at least one of the mesogenic side groups **M** contains a methacrylyl or acrylyl group.

2. Organosiloxanes (F) according to Claim 1, in which the proportion of mesogenic side groups containing methacrylyl or acrylyl groups is at least 10%.

3. Organosiloxanes (F) according to Claim 1 or 2, which contain units of the formulae R¹₂Si and, if desired, R¹₃Si.

4. Organosiloxanes (F) according to any of Claims 1 to 3, in which one mesogenic side group contains three nuclei.

5. Organosiloxanes (F) according to any one of Claims 1 to 4, which contain mesogenic side groups of the general formula (3) 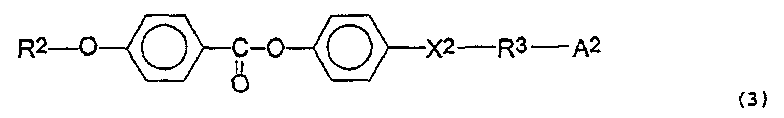 where **R**^{**2**}**, X**^{**2**}**, R**^{**3**} and **A**^{**2**} are as defined under the formula (2) in Claim 1.

6. Process for the preparation of the organosiloxanes (F) according to any one of Claims 1 to 5, in which organosiloxanes containing at least two units of the general formula (6)
[HR¹ ₚSiO_{q/2}] (6)
in which, independently of one another in each case either p = 1 and q = 2 or p = 2 and q = 1,
are reacted with alkenes containing mesogenic radicals, of the general formula 7
R⁷-X¹-(A¹-X²)ₐ-R³-A² (7)
where, in the above general formulae (6) and (7),
**R**^{**1**} **R**^{**3**}**, X**^{**1**}**, X**^{**2**}**, A**^{**1**}**, A**^{**2**} and **a** are as defined under the general formulae (1) and (2), and
**R**^{**7**} is a radical of the formula H₂C = CH-CₖH₂ₖ₋₁, where **k** is an integer having a value of from 1 to 8 and in which one or more methylene units which are not adjacent to one another may be replaced by oxygen atoms or dimethylsilyl radicals, with the proviso that of the alkenes of the general formula 7 at most one has three nuclei **A**^{**1**} and all the others have two nuclei **A**^{**1**}**,** and at least one of the alkenes of the general formula 7 contains a methacrylyl or acrylyl group.

7. Use of the organosiloxanes (F) according to any one of Claims 1 to 5 for the production of optically anisotropic layers.

## Revendications

1. Organosiloxanes nématiques (F) renfermant de 2 à 15 atomes de silicium et renfermant au moins deux motifs de formule générale (1)
[MR¹ ₚSiO_{q/2}] (1),
dans lesquels, dans chaque cas indépendamment l'un de l'autre, soit p=1 et q=2, soit p=2 et q=1,
R¹ représente des radicaux hydrocarbonés en C₁ à C₁₀, et dans lesquels
M représente des groupes latéraux mésogènes de formule générale (2)
R²-X¹-(A¹-X²)ₐ-R³-A² (2)
où, dans la formule (2) ci-dessus,
R² représente un radical de formule (CH₂)ₙ, dans lequel n est un entier valant de 2 à 10, un ou plusieurs motifs méthylène non voisins les uns des autres pouvant être remplacés par des atomes d'oxygène ou des radicaux diméthylsilyle,
R³ représente une liaison chimique ou un radical de formule (CH₂)ₘ, dans lequel m est un entier valant de 1 à 12, un ou plusieurs motifs méthylène non voisins les uns des autres pouvant être remplacés par des atomes d'oxygène ou des radicaux diméthylsilyle,
X¹ est une liaison chimique ou est choisi parmi des radicaux bivalents du groupe constitué de -O-,-COO- et -OCO-,
X² représente des groupes de liaison identiques ou différents qui sont choisis, indépendamment les uns des autres, parmi le groupe constitué de la liaison chimique et de radicaux bivalents du groupe constitué de -COO-, -OCO-, -CH₂CH₂-, -CH=N-, -N=CH-, -N=N-, -CONH-, -HONC-, -C≡C-, -CH=CH-,-N=N(O)- et -N(O)=N-,
A¹ représente des noyaux identiques ou différents qui sont choisis, indépendamment les uns des autres, parmi des radicaux bivalents du groupe constitué du 1,4-phénylène, du 1,4-cyclohexylène, du 2,5-pyridinylène, du 2,5-pyranylène, du 2,5-pyrimidinylène, du 5,2-pyrimidinylène, du 2,5-(1,3-dioxanylène), du 5,2-(1,3-dioxanylène), du 2,6-naphtylidène, du 2,7-naphtylidène et du 1,4-naphtylidène,
A² représente un groupe terminal qui est choisi parmi le groupe constitué d'atomes d'hydrogène, d'atomes d'halogène, de radicaux hydroxy, phényle, acryloyloxy, (méth)acryloyloxy, (méth)acryléthylène-oxy et des radicaux cyclohexane, et
a peut prendre la valeur 2 ou 3,
à condition que parmi les groupes latéraux mésogènes M, l'un au plus renferme trois noyaux A¹ et tous les autres renferment deux noyaux A¹, et au moins l'un des groupes latéraux mésogènes M renferme un groupe méthacrylique ou acrylique.

2. Organosiloxanes (F) selon la revendication 1, dans lesquels la proportion des groupes latéraux mésogènes renfermant des groupes acryliques ou méthacryliques est d'au moins 10%.

3. Organosiloxanes (F) selon la revendication 1 ou 2, lesquels renferment des motifs de formule R¹₂Si et éventuellement R¹₃Si.

4. Organosiloxanes (F) selon les revendications 1 à 3, dans lesquels l'un des groupes latéraux mésogènes renferme trois noyaux.

5. Organosiloxanes (F) selon les revendications 1 à 4, lesquels renferment des groupes latéraux mésogènes de formule générale (3) 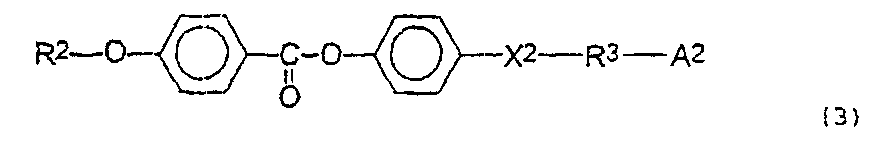 dans laquelle R², X², R³ et A² ont les significations indiquées conformément à la revendication 1 pour la formule (2).

6. Procédé de préparation des organosiloxanes (F) selon les revendications 1 à 5, dans lequel des organosiloxanes renfermant au moins deux motifs de formule générale (6)
[HR¹ ₚSiO_{q/2}] (6)
dans lesquels, dans chaque cas indépendamment l'un de l'autre, soit p=1 et q=2, soit p=2 et q=1,
sont mis à réagir avec des alcènes renfermant des radicaux mésogènes, de formule générale 7
R⁷-X¹-(A¹-X²)ₐ-R³-A² (7)
où dans les formules générales (6) et (7) ci-dessus
R¹, R³, X¹, X², A¹, A² et a ont les significations indiquées pour les formules générales (1) et (2), et
R⁷ représente un radical de formule H₂C = CH-CₖH₂ₖ₋₁, dans lequel k est un entier valant de 1 à 8, un ou plusieurs motifs méthylène non voisins les uns des autres pouvant être remplacés par des atomes d'oxygène ou des radicaux diméthylsilyle,
à condition que parmi les alcènes de formule générale 7, l'un au plus renferme trois noyaux A¹ et tous les autres renferment deux noyaux A¹, et au moins l'un des alcènes de formule générale 7 renferme un groupe méthacrylique ou acrylique.

7. Utilisation des organosiloxanes (F) selon les revendications 1 à 5, pour la production de couches à anisotropie optique.
